Europäisches Patentamt

European Patent Office

Office européen des brevets

(19)

(11) Numéro de publication : **0 312 433 B1**

(12)

# FASCICULE DE BREVET EUROPEEN

(45) Date de publication du fascicule du brevet :
**03.06.92 Bulletin 92/23**

(51) Int. Cl.⁵ : **C01G 56/00,** G21C 19/46

(21) Numéro de dépôt : **88402551.1**

(22) Date de dépôt : **10.10.88**

(54) **Procédé de dissolution réductrice du Pu02, utilisable notamment pour le traitement de déchets organiques contaminés par Pu02.**

(30) Priorité : **13.10.87 FR 8714110**

(43) Date de publication de la demande :
**19.04.89 Bulletin 89/16**

(45) Mention de la délivrance du brevet :
**03.06.92 Bulletin 92/23**

(84) Etats contractants désignés :
**BE DE GB**

(56) Documents cités :
**EP-A- 0 228 679
FR-A- 1 387 127
FR-A- 1 465 032
FR-A- 2 456 545
US-A- 3 005 682
US-A- 3 725 294**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Machuron-Mandard, Xavier 8, rue Pierre Kohlmann F-92160 Antony (FR)**
Inventeur : **Madic, Charles 5, Place du Marché F-94320 Thiais (FR)**
Inventeur : **Koehly, Gérard 17, Allée des Primevères F-91570 Bievres (FR)**

(74) Mandataire : **Mongrédien, André et al c/o BREVATOME 25, rue de Ponthieu F-75008 Paris (FR)**

EP 0 312 433 B1

Jouve, 18, rue Saint-Denis, 75001 PARIS

## Description

La présente invention concerne un procédé de dissolution d'un composé réfractaire du plutonium difficile à dissoudre, le bioxyde de plutonium.

Elle s'applique en particulier à la dissolution de ce composé présent dans des déchets solides, en particulier dans des déchets organiques.

L'un des problèmes importants rencontrés fréquemment dans les installations nucléaires est la récupération du plutonium sous forme d'oxyde $PuO_2$ pratiquement insoluble dans les solutions acides. Ce composé est présent en particulier dans des déchets solides provenant soit de la fabrication des éléments combustibles nucléaires, soit du traitement des combustibles nucléaires irradiés. Ces déchets peuvent être constitués par des cendres provenant de l'incinération à 800-900°C de déchets combustibles fortement contaminés en plutonium, dans lesquelles le plutonium se trouve sous forme d'oxyde. D'autres déchets sont constitués par des déchets de laboratoire, notamment des déchets en matériaux organiques tels que des matières plastiques et cellulosiques, contaminés par du plutonium sous la forme d'oxyde difficile à dissoudre.

Jusqu'à présent, quatre techniques ont été utilisées pour dissoudre le bioxyde de plutonium.

La première technique consiste à maintenir le plutonium à l'état tétravalent lors de sa mise en solution. Un procédé utilisant cette technique repose sur l'action catalytique des ions fluorure et la formation d'un anion complexe $PuF^{3+}$ permettant de solubiliser le plutonium dans une solution nitrique. Cette dissolution peut être accélérée par adjonction d'un composé d'argent qui oxyde l'ion complexe $PuF^{3+}$ et régénère ainsi les ions $F^-$. Ce procédé est décrit en particulier dans les brevets américains US-A- 3 976 775 et US-A- 4 069 293.

Ce procédé a l'inconvénient de nécessiter l'emploi de réactifs corrosifs et de produire des effluents fluorés dont le traitement pose des problèmes. Par ailleurs, quand le plutonium est présent dans des déchets organiques réducteurs, ceux-ci peuvent être oxydés par les ions $Ag^{2+}$ qui ne jouent plus leur rôle d'accélérateur de la réaction de dissolution de l'oxyde de plutonium. Ce procédé est donc mal adapté au traitement de déchets organiques.

Une autre voie possible pour dissoudre le plutonium en le maintenant à l'état tétravalent, est de le transformer en sulfate de plutonium par action d'acide sulfurique concentré à une température élevée, de l'ordre de 250°C, comme il est décrit par B. Stojanik et al dans Radiochimica Acta 36, 155-157, 1984. Cette méthode a ainsi l'inconvénient de nécessiter la mise en oeuvre de températures élevées et de solutions acides concentrées. Par ailleurs, elle ne permet pas la dissolution complète de $PuO_2$ lorsque celui-ci a été soumis à des températures élevées.

La seconde technique de dissolution du bioxyde de plutonium est la dissolution oxydante dans laquelle on amène le plutonium à l'état soluble par oxydation à la valence VI. Ceci peut être obtenu en utilisant un agent oxydant puissant tel que l'ion $Ag^{2+}$ comme il est décrit dans les brevets européens EP-A- 0 160 589 et 0 158 555.

Cette technique est très intéressante car elle permet d'obtenir des vitesses de dissolution élevées. Cependant, elle est mal adaptée au traitement de déchets organiques ayant des propriétés réductrices car dans ce cas, les matières organiques réductrices peuvent être oxydées par les ions $Ag^{2+}$ qui de ce fait ne peuvent plus participer à la réaction de dissolution. Ceci réduit l'efficacité du procédé et augmente fortement le temps de traitement des déchets, ce qui constitue un handicap pour la mise en oeuvre à l'échelle industrielle de ce type de traitement.

Une troisième technique de dissolution du bioxyde de plutonium consiste à traiter le bioxyde de plutonium par une solution concentrée d'acide iodhydrique (6M) portée à l'ébullition comme il est décrit dans le brevet US-A- 4 134 960. Cependant, dans un tel procédé, la vitesse de dissolution est assez faible et l'effluent obtenu est difficile à traiter.

Une quatrième technique basée sur la réduction du plutonium décrite dans FR-A- 2 553 560, consiste à dissoudre le bioxyde de plutonium dans une solution nitrique portée à l'ébullition contenant de l'uranium IV et de l'hydrazine. En effet, dans ce procédé, la stabilisation de l'uranium IV par l'hydrazine est nécessaire ; aussi, un appauvrissement en hydrazine en fin de dissolution peut conduire à une oxydation autocatalytique de l'excès d'uranium IV, c'est-à-dire à une réaction explosive rendant délicate toute mise en oeuvre à l'échelle industrielle.

Ainsi, les procédés connus actuellement ne permettent pas d'assurer dans de bonnes conditions la dissolution d'un composé réfractaire du plutonium tel que le bioxyde de plutonium, présent dans des déchets ayant des propriétés réductrices.

La présente invention a précisément pour objet un procédé de dissolution réductrice du bioxyde de plutonium, qui pallie cet inconvénient.

Ce procédé consiste à mettre en contact le bioxyde de plutonium avec une solution aqueuse acide, dépourvue d'hydrazine, contenant un agent réducteur dont le potentiel d'oxydoréduction est inférieur à +0,5 V/ENH pour réduire le plutonium et le faire passer en solution.

2

L'utilisation selon l'invention d'agents réducteurs ayant un potentiel inférieur à + 0,5 V/ENH permet d'effectuer la réduction du plutonium de la valence IV à la valence III et de le solubiliser ainsi dans la solution acide.

En effet, le potentiel standard de la transformation

$$PuO_2 \ (solide) \ + \ 4H^+ \ + \ e \xrightarrow{E_o} Pu^{3+} \ + \ 2H_2O$$

est $E_o$=0,544 V/ENH à 25°C et $E_o$=0,487 V/ENH à 85°C. Aussi, l'utilisation de réducteurs ayant un potentiel d'oxydoréduction inférieur à +0,5 V/ENH permet d'obtenir cette transformation.

Ainsi, contrairement à ce qu'indiquent les auteurs du FR-A- 2 553 560, l'ion ferreux $Fe^{2+}$ dont le potentiel redox est égal à +0,77 V/ENH ne peut convenir pour réaliser cette transformation.

A titre d'exemple d'agents réducteurs susceptibles de convenir, on peut citer $Cr^{2+}$, $U^{4+}$, $U^{3+}$, $Eu^{2+}$, $V^{3+}$, $V^{2+}$, $Ti^{3+}$ et $Ti^{2+}$.

Selon l'invention, on choisit l'agent réducteur de façon à obtenir une cinétique de dissolution favorable en fonction de la solution et des conditions opératoires utilisées.

Selon un premier mode de mise en oeuvre du procédé de l'invention, l'agent réducteur est présent dans la solution aqueuse acide en quantité suffisante pour réduire la totalité du plutonium à dissoudre. Lorsque l'agent réducteur est l'un des ions mentionnés précédemment, il peut être introduit sous la forme de sel soluble, par exemple de sulfate. On peut aussi l'introduire en solution sous forme oxydée et le réduire en solution, par exemple par électrochimie ou par de l'amalgame de zinc.

Lorsque la réaction d'oxydation de l'agent réducteur ne met en jeu qu'un seul électron, il est nécessaire que la concentration molaire en agent réducteur de la solution soit au moins égale à la concentration molaire de plutonium à dissoudre. Si la réaction d'oxydation de l'agent réducteur met en jeu plusieurs électrons, les concentrations molaires en agent réducteur peuvent être plus faibles.

Ce mode de mise en oeuvre du procédé peut être utilisé lorsque les quantités de plutonium à dissoudre sont faibles. En revanche, si les quantités sont relativement importantes, il est préférable de régénérer l'agent réducteur en solution pour limiter les quantités d'agent réducteur utilisées.

Aussi, selon un second mode de mise en oeuvre du procédé de l'invention, on régénère par électrolyse l'agent réducteur en solution.

Ceci peut être effectué en utilisant les installations de dissolution oxydante décrites dans les brevets européens EP-A- 158 555 et EP-A- 160 589 où l'on régénérait l'agent oxydant $Ag^{2+}$ par électrolyse. Dans l'invention, la régénération a lieu sur la cathode et l'on inverse les compartiments anodique et cathodique par rapport à ce qui était utilisé dans les installations pour la dissolution oxydante.

Dans ce second mode de mise en oeuvre du procédé de l'invention, la concentration en agent réducteur de la solution est généralement de 0,02 à 0,2 mol/l.

Les solutions aqueuses acides utilisées pour la dissolution peuvent être de différents types, la seule condition étant que l'acide soit compatible avec les espèces chimiques pouvant se trouver en solution, en particulier avec le plutonium et l'agent réducteur.

A titre d'exemple, on peut utiliser de l'acide sulfurique, de préférence à une concentration molaire de 0,5 à 7mol/l. On pourrait aussi utiliser de l'acide formique.

On évite de préférence l'utilisation d'acide nitrique en raison des réactions possibles entre l'acide nitreux et l'agent réducteur, notamment lorsqu'il s'agit d'U(IV).

Lorsque l'on régénère par électrolyse l'agent réducteur, on place le plutonium à dissoudre, éventuellement inclus dans des déchets, en présence de la solution de dissolution dans le compartiment cathodique d'un électrolyseur comportant une anode et une cathode. On peut introduire l'agent réducteur sous sa forme oxydée et le générer au début de la réaction par application d'une différence de potentiel suffisante pour réduire sa forme oxydée.

De préférence, on agite fortement la solution, d'une part, pour faciliter les échanges entre la solution et la cathode, et, d'autre part, pour imprégner parfaitement le bioxyde de plutonium ou les déchets le contenant avec la solution. On accélère ainsi les réactions, en particulier la réduction de l'espèce oxydée de l'agent réducteur car la cinétique de réduction dépend principalement de la vitesse à laquelle les ions à réduire peuvent atteindre la cathode.

Généralement, on applique la différence de potentiel de manière à imposer un courant constant dans la cellule qui permet la régénération permanente du réducteur.

Le matériau dans lequel est réalisé la cathode doit répondre aux propriétés électrochimiques de l'agent réducteur et posséder les qualités mécaniques et chimiques suffisantes pour rester inaltéré dans les conditions opératoires retenues.

Lorsque la régénération du réducteur s'effectue à un potentiel supérieur à celui de la réduction de la solution, la cathode peut être fabriquée en platine. Dans le cas de réducteurs plus puissants, nécessitant une surtension cathodique importante, on peut utiliser une électrode comportant un support massif en cuivre recouvert d'or, le tout amalgamé par trempage dans du mercure. En effet, une telle électrode possède à peu près la surtension cathodique du mercure grâce à l'utilisation d'amalgame d'or comme matériau électro-actif. Le support de cuivre contribue quant à lui à la rigidité de l'électrode. L'utilisation d'une telle électrode est particulièrement adaptée à la régénération de réducteurs puissants tels que $Cr^{2+}$, $U^{4+}$, $U^{3+}$, $Eu^{2+}$, $V^{2+}$, $Ti^{3+}$ et $Ti^{2+}$.

Afin d'améliorer l'efficacité de l'électrolyse, de même que la vitesse de réaction entre le réducteur et le composé de plutonium, on opère de préférence à une température supérieure à la température ambiante, par exemple à une température de 50 à 100°C.

Par ailleurs, lorsque le réducteur utilisé réagit avec l'oxygène, on place le compartiment cathodique sous atmosphère inerte pour éviter cette réaction. On ajoute également un condenseur au compartiment cathodique afin de limiter la vaporisation de la solution.

D'autres caractéristiques et avantages de l'invention apparaîtront mieux à la lecture des exemples suivants de mise en oeuvre du procédé de l'invention donnés bien entendu à titre illustratif et non limitatif.

Les exemples comparatifs 1 et 5 montrent les avantages apportés par le procédé de l'invention.

Exemple 1 : Dissolution de $PuO_2$ par $Cr^{2+}$ dans $H_2SO_4$ 5M.

On utilise un électrolyseur comportant une anode en platine et une cathode constituée par un support massif en cuivre recouvert d'or, le tout amalgamé par trempage dans du mercure. L'électrolyseur est séparé en deux compartiments par une paroi poreuse.

On introduit dans le compartiment cathodique 1134 mg de poudre de $PuO_2$ calcinée à 500°C et 100ml d'une solution d'acide sulfurique à 5mol/l de $H_2SO_4$ contenant 0,1mol/l d'ions $Cr^{3+}$. On soumet la solution à une agitation au moyen d'un agitateur magnétique et on applique entre l'anode et la cathode une différence de potentiel telle que la densité de courant sur la cathode est de 0,036A/cm², tout en maintenant l'électrolyseur à une température de 85°C.

Après 16 min d'agitation, on constate que le taux de dissolution est de 100%, 85% du plutonium est présent dans la solution sous forme de Pu(III), ce qui correspond à 8,5g/l, et les 15% restants sont présents sous forme d'un précipité bleu de sulfate de plutonium(III). La vitesse de dissolution correspondante est de 6,25%/min ce qui correspond à un rendement faradique de 37,7%.

Exemple comparatif 1 : Dissolution de $PuO_2$ par $H_2SO_4$ 5M.

On suit le même mode opératoire que dans l'exemple 1 pour tenter de dissoudre 1134mg de la même poudre de $PuO_2$ dans la même solution en opérant à une température de 85°C et sous agitation, mais sans appliquer de différence de potentiel entre l'anode et la cathode. Ainsi, on ne peut engendrer puis régénérer dans la solution les ions $Cr^{2+}$ qui jouent le rôle d'agent réducteur du plutonium.

Dans ces conditions, après deux heures d'agitation, le taux de dissolution ne dépasse pas 10%, ce qui correspond à une vitesse de 0,1%/min. On constate ainsi que l'acide sulfurique est inefficace en l'absence d'agent réducteur pour la dissolution de bioxyde de plutonium.

Exemple 2 : Dissolution de $PuO_2$ par $Cr^{2+}$ dans $H_2SO_4$ 1M

On suit le même mode opératoire que dans l'exemple 1 pour réaliser la dissolution de 1134mg d'une poudre de $PuO_2$ identique à celle de l'exemple 1 en utilisant 100 ml de solution d'acide sulfurique à 1mol/l d'acide sulfurique contenant 0,1mol/l de $Cr^{3+}$. On opère dans les mêmes conditions de température, de densité de courant et d'agitation.

Après 8min d'agitation, le taux de dissolution est de 100% et l'on obtient une solution de $Pu^{3+}$ à 10g/l. La vitesse de réaction est ainsi égale à 12,5%/min, ce qui correspond à un rendement faradique de 80%.

Exemple 3 : Dissolution de $PuO_2$ par $Cr^{2+}$ dans $H_2SO_4$ 1M.

Dans cet exemple, on réalise la dissolution de $PuO_2$ sans régénérer électolytiquement l'espèce réductrice, c'est-à-dire les ions $Cr^{2+}$.

On introduit dans un réacteur thermostaté placé sous atmosphère inerte une masse de 266mg de poudre de $PuO_2$ calcinée à 450°C. On introduit dans le réacteur 120ml d'une solution d'acide sulfurique à 1mol/l contenant 0,1mol/l d'ions $Cr^{2+}$. Après 9min d'agitation à 70°C, le taux de dissolution est de 100%, ce qui correspond à une vitesse de dissolution de 11%/min et à une concentration finale en plutonium de la solution de 2g/l.

Ainsi, lorsqu'on utilise une quantité d'ions chrome suffisante pour réduire tout le plutonium, il n'est pas nécessaire de régénérer électrolytiquement les ions $Cr^{2+}$ et l'on peut obtenir dans de bonnes conditions la dissolution de $PuO_2$.

**Exemple 4** : Dissolution de $PuO_2$ par U(IV).

On suit le même mode opératoire que dans l'exemple 2 pour dissoudre 1134 mg de poudre de $PuO_2$ calcinée à 500°C mais en utilisant 100 ml d'une solution de sulfate d'uranyle ayant une concentration en acide sulfurique de 1mol/l et une concentration en ions $UO_2^{2+}$ de 0,1mol/l. On engendre et régénère électrolytiquement l'agent réducteur $U^{4+}$ et l'on opère dans les mêmes conditions de température, de densité de courant cathodique et d'agitation que dans l'exemple 1.

Après 40min d'agitation, le taux de dissolution est de 100%, ce qui correspond à une vitesse de 2,5%/min et à un rendement faradique de 13%.

Ainsi, on remarque que l'uranium IV est efficace pour réaliser la dissolution de $PuO_2$ en solution sulfurique, mais que la réaction est légèrement plus lente.

**Exemple 5** : Dissolution de $PuO_2$ en présence de cellulose par $Cr^{2+}$ dans $H_2SO_4$ 1M.

On suit les mêmes conditions opératoires que dans l'exemple 2 pour dissoudre 1134mg de $PuO_2$ identique à celui de l'exemple 2 auquel on ajoute 1g de cellulose finement divisée. On utilise la même solution que dans l'exemple 2 et les mêmes conditions de température, d'agitation et de densité de courant cathodique.

Après 8min d'agitation, le taux de dissolution est de 100% comme dans l'exemple 2 et la teneur en plutonium (III) de la solution est de 10g/l.

**Exemple comparatif 5** : Dissolution oxydante à l'argent du mélange $PuO_2$/cellulose.

Dans cet exemple, on utilise le procédé de dissolution oxydante décrit dans le brevet européen EP-A- 158 555 pour réaliser la dissolution du $PuO_2$ en présence de cellulose. On introduit ainsi dans l'électrolyseur 1134mg de $PuO_2$ identique à celui de l'exemple 1 et 1g de cellulose finement divisée, puis on ajoute 100ml d'une solution d'acide nitrique à 5mol/l contenant 0,1mol/l de $Ag^+$ et on applique une densité de courant anodique de 0,036A/cm² pour régénérer les ions $Ag^+$, en opérant à 25°C.

Dans ces conditions, après 100min d'agitation, le taux de dissolution de $PuO_2$ n'est que d'environ 40%, ce qui correspond à une vitesse de dissolution de 0,4%/min et à un rendement faradique de 5%.

On remarque ainsi que la dissolution oxydante à l'argent est beaucoup moins efficace pour réaliser la dissolution de $PuO_2$ en présence de matières organiques ayant des propriétés réductrices.

**Exemple 6** : Décontamination de cryobroyats par dissolution réductrice.

Dans cet exemple, on dissout le plutonium présent dans des déchets nucléaires formés de cryobroyats qui sont des déchets principalement constitués de matières organiques contaminées et broyées.

On place dans le réacteur une masse de 6,33g de cryobroyats et on ajoute 100ml d'une solution d'acide sulfurique à 1mol/l contenant 0,1mol/l d'ions $Cr^{3+}$. On maintient à une température de 85°C, et on utilise la même densité de courant cathodique (0,036A/cm²) et les mêmes conditions d'agitation que celles de l'exemple 1.

Après 62 min de réaction, le taux de décontamination est de 100%.

On constate ainsi que le procédé de l'invention permet d'obtenir la décontamination en plutonium de déchets organiques dans de bonnes conditions avec des durées de traitement relativement courtes.

**Exemple 7** : Décontamination de déchets organiques broyés par dissolution réductrice par V(II) et V(III).

On place dans l'électrolyseur une masse de 12,44g de déchets plutonifères et 200ml d'acide sulfurique à 1,05mol/l contenant 0,1mol/l de $VOSO_4$. On porte le mélange à une température de 85°C et on réalise l'électrolyse en utilisant une densité de courant égale à 0,029A/cm². Après 2h15 d'électrolyse, on constate que 90% du plutonium présent initialement dans les déchets sont passés en solution.

La courbe traduisant la cinétique de solubilisation du plutonium montre que V(III) (généré en début d'électrolyse) et V(II) (généré lorsque tout le V(IV) initial a disparu) sont efficaces pour solubiliser le plutonium contenu dans les déchets.

**Exemple 8** : Décontamination de déchets organiques broyés par dissolution réductrice par U(IV), U(III).

On suit le même mode opératoire que dans l'exemple 7, en utilisant $UO_2SO_4$ à la place de $VOSO_4$. Les déchets ont la même origine que ceux de l'exemple 7 et les conditions d'électrolyse sont identiques à celles de l'exemple 7.

Après 3h30 d'électrolyse, un taux de solubilisation du plutonium égal à 90% est atteint.

La cinétique de solubilisation du plutonium montre que U(IV) et U(III) sont efficaces. Néanmoins, l'action de U(III) conduit à une solubilisation plus rapide du plutonium.

## Revendications

1. Procédé de dissolution de bioxyde de plutonium, caractérisé en ce qu'il consiste à mettre en contact le bioxyde de plutonium avec une solution aqueuse acide dépourvue d'hydrazine, contenant un agent réducteur dont le potentiel d'oxydoréduction est inférieur à +0,5V/ENH pour réduire le plutonium et le faire passer en solution.

2. Procédé selon la revendication 1, caractérisé en ce que l'agent réducteur est présent dans la solution en quantité suffisante pour réduire la totalité du plutonium à dissoudre.

3. Procédé selon la revendication 1, caractérisé en ce que l'on régénère par électrolyse l'agent réducteur en solution.

4. Procédé selon l'une quelconque des revendications 1 à 3, caractérisé en ce que l'agent réducteur est choisi dans le groupe comprenant $Cr^{2+}$, $U^{4+}$, $U^{3+}$, $Eu^{2+}$, $V^{3+}$, $V^{2+}$, $Ti^{3+}$ et $Ti^{2+}$.

5. Procédé selon l'une quelconque des revendications 1 à 4, caractérisé en ce que la solution aqueuse est une solution d'acide sulfurique.

6. Procédé selon la revendication 5, caractérisé en ce que la solution aqueuse contient 0,5 à 7mol/l d'acide sulfurique.

7. Procédé selon la revendication 3, caractérisé en ce que la concentration en agent réducteur de la solution acide est de 0,02 à 0,2 mol/l.

8. Procédé selon la revendication 3, caractérisé en ce que l'on réalise la dissolution dans une cellule d'électrolyse comportant une cathode et une anode, séparée en deux compartiments cathodique et anodique par une paroi poreuse, on introduit le composé de plutonium à dissoudre dans le compartiment cathodique et on applique entre l'anode et la cathode une différence de potentiel suffisante pour régénérer l'agent réducteur en soumettant la solution à une agitation.

9. Procédé selon la revendication 8, caractérisé en ce que la cathode comprend un support massif en cuivre recouvert d'or, amalgamé par trempage dans du mercure.

10. Procédé selon l'une quelconque des revendications 1 à 9, caractérisé en ce que l'on opère à une température de 50 à 100°C.

11. Procédé selon l'une quelconque des revendications 1 à 10, caractérisé en ce que le bioxyde de plutonium est présent dans des déchets organiques solides ayant des propriétés réductrices.

12. Procédé selon la revendication 11, caractérisé en ce que les déchets organiques sont des déchets cellulosiques.

## Patentansprüche

1. Verfahren zur Auflösung von Plutoniumdioxid, dadurch gekennzeichnet, daß es darin besteht, das Plutoniumdioxid mit einer wäßrigen, hydrazinarmen Säurelösung, welche ein Reduktionsmittel enthält, dessen Oxydations-Reduktions-Potential kleiner als +0,5 V/ENH ist, in Berührung zu bringen, um das Plutonium zu reduzieren und es in Lösung gehen zu lassen.

2. Verfahren gemäß Anspruch 1, dadurch gekennzeichnet, daß das Reduktionsmittel in der Lösung in einer zur Reduktion des gesamten aufzulösenden Plutoniums ausreichenden Menge vorhanden ist.

3. Verfahren gemäß Anspruch 1, dadurch gekennzeichnet, daß man das Reduktionsmittel in Lösung mittels Elektrolyse regeneriert.

4. Verfahren gemäß einem der Ansprüch 1 bis 3, dadurch gekennzeichnet, daß das Reduktionsmittel aus der $Cr^{2+}$, $U^{4+}$, $U^{3+}$, $Eu^{2+}$, $V^{3+}$, $V^{2+}$, $Ti^{3+}$ und $Ti^{2+}$ umfassenden Gruppe ausgewählt ist.

5. Verfahren gemäß einem der Ansprüch 1 bis 4, dadurch gekennzeichnet, daß die wäßrige Lösung eine Schwefelsäurelösung ist.

6. Verfahren gemäß Anspruch 5, dadurch gekennzeichnet, daß die wäßrige Lösung 0,5 bis 7 Mol/l Schwefelsäure enthält.

7. Verfahren gemäß Anspruch 3, dadurch gekennzeichnet, daß die konzentration der wäßrigen Lösung an Reduktionsmittel 0,02 bis 0,2 Mol/l beträgt.

8. Verfahren gemäß Anspruch 3, dadurch gekennzeichnet, daß man die Auflösung in einer Elektrolysezelle durchführt, welche eine Kathode und eine Anode beinhaltet und durch eine poröse Wand in zwei Kathoden- und Anodenräume getrennt ist, man die aufzulösende Plutoniumverbindung in den Kathodenraum einbringt und man zwischen der Anode und der Kathode einen zur Regenerierung des Reduktionsmittel ausreichenden Potentialunterschied aufbaut, wobei man die Lösung einem Rührvorgang unterwirft.

9. Verfahren gemäß Anspruch 8, dadurch gekennzeichnet, daß die Kathode einen mit Gold überzogenen Träger aus massivem Kupfer enthält, welcher durch Tauchen in Quecksilber amalgamiert wurde.

10. Verfahren gemäß einem der Anspruch 1 bis 9, dadurch gekennzeichnet, daß man bei einer Temperatur von 50 bis 100°C arbeitet.

11. Verfahren gemäß einem der Ansprüch 1 bis 10, dadurch gekennzeichnet, daß das Plutoniumdioxid in festen organischen befällen, welche reduzierende Eigenschaften besitzen, vorliegt.

12. Verfahren gemäß Anspruch 11, dadurch gekennzeichnet, daß die organischen befälle Celluloseabfälle sind.

## Claims

1. Process for dissolving plutonium dioxide, characterized in that it comprises contacting the plutonium dioxide with a hydrazine-free, acid aqueous solution containing a reducing agent, whose redox potential is below +0.5 V/ENH to reduce and dissolve the plutonium.

2. Process according to claim 1, characterized in that the reducing agent is present in the solution in a quantity adequate for reducing all the plutonium to be dissolved.

3. Process according to claim 1, characterized in that the reducing agent in solution is regenerated by electrolysis.

4. Process according to any one of the claims 1 to 3, characterized in that the reducing agent is chosen in the group including $Cr^{2+}$, $U^{4+}$, $U^{3+}$, $Eu^{2+}$, $V^{3+}$, $V^{2+}$, $Ti^{3+}$ and $Ti^{2+}$.

5. Process according to any one of the claims 1 to 4, characterized in that the aqueous solution is a sulphuric acid solution.

6. Process according to claim 5, characterized in that the aqueous solution contains 0.5 to 7 mol/l of sulphuric acid.

7. Process according to claim 3, characterized in that the reducing agent concentration of the acid solution is 0.02 to 0.2 mol/l.

8. Process according to claim 3, characterized in that dissolving takes place in an electrolytic cell having a cathode and an anode, subdivided into a cathode compartment and an anode compartment by a porous wall, the plutonium to be dissolved is introduced into the cathode compartment and between the anode and the cathode is applied a potential difference adequate for regenerating the reducing agent and accompanied by the stirring of the solution.

9. Process according to claim 8, characterized in that the cathode comprises a gold-covered, solid copper support amalgamed by soaking in mercury.

10. Process according to any one of the claims 1 to 9, characterized in that a temperature of 50 to 100°C is used.

11. Process according to any one of the claims 1 to 10, characterized in that the plutonium dioxide is present in solid organic waste having reducing properties.

12. Process according to claim 11, characterized in that the organic waste is cellulose waste.